# EUROPEAN PATENT SPECIFICATION

(11) **EP 0 938 924 B1**
(45) Date of publication and mention of the grant of the patent: **07.05.2003**
(21) Application number: 98102275.9
(22) Date of filing: 10.02.1998
(51) Int. Cl.: C08F 8/04, B01J 8/02, B01J 8/00

(54) **Use of a fixed bed reactor for catalytic reactions**
Verwendung eines Festbettreaktors in katalytischen Reaktionen
Utilisation d'un réacteur à lit fixe pour des réactions catalytiques

(43) Date of publication of application: 01.09.1999
(73) Proprietor: Eastman Chemical Resins, Inc., Kingsport, TN 37660 (US)
(72) Inventor: Bergmans, Hans JHM, 4336 AD Middelburg (NL); Keim, Piet M., 4463 HL Goes (NL)
(74) Representative: Wibbelmann, Jobst, Dr., Dipl.-Chem.

(56) References cited:
- EP-A- 0 269 171
- EP-A- 0 617 053
- EP-A- 0 725 087
- DE-A- 1 720 524
- DE-A- 2 164 569
- DE-C- 903 690
- GB-A- 728 821
- US-A- 2 203 840

## Description

### Technical Field

The present invention relates to the use of a fixed bed reactor catalytic reactions. Catalytic fixed bed reactors are commonly used, e.g. for the hydrogenation of hydrocarbon resins. In the case of a chemical reaction with a high exothermic heat of reaction, high temperature increases in the catalytic fixed bed may result. However, the catalyst lifetime is related to the temperature of the catalytic fixed bed, as well as certain product properties. Moreover, many catalytic reactions lead to products which are subject to degradation or cracking effects at elevated temperatures. Therefore, in the case of those fields of application of catalytic fixed bed reactors, care has to be taken to effectively convey the exothermic heat of reaction out of the fixed bed.

This is often accomplished by using fixed bed reactors consisting of a vessel with external cooling via the reactor wall.

### Background art

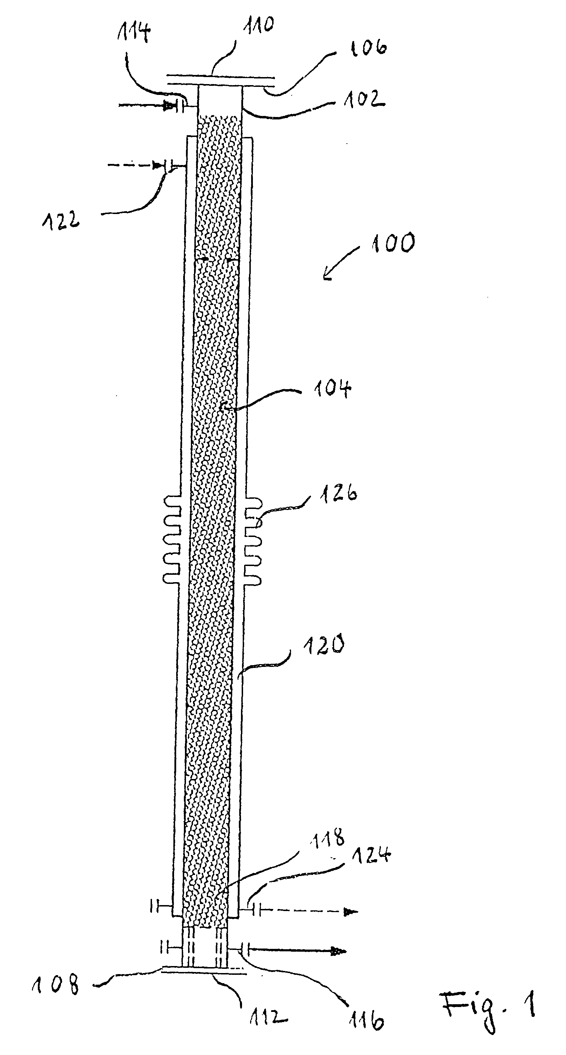

An example of such a commonly used hydrogenation reactor is given in Fig. 1.

The hydrogenation reactor is generally designated by reference numeral 100 and consists of a reaction vessel 102 containing a catalytic fixed bed 104. The reaction vessel is usually a steel tube with an upper flange 106 and lower flange 108 which are schematically depicted in Fig. 1. These flanges serve to fix sealing lids 110 and 112 to the flanges 106 and 108.

The vessel 102 is provided with a product supply duct 114 and a product exit duct 116, which can be closed by a suitable valve means (not shown). The catalytic fixed bed, i.e. the catalyst pellets, rest on a grid 118 which is arranged near the bottom side of the vessel 102, i.e. adjacent to the bottom flange 108.

In order to cool the reaction vessel 102, it is surrounded by a cooling jacket 120 with a cooling oil supply duct 122 and a cooling oil exit duct 124. Finally, a suitable means is provided to compensate the thermal expansion of the cooling jacket 120. This can be accomplished by any suitable means known in the art, e.g. a flexible compensator section 126.

The cooling jacket is installed to remove the exothermic heat of reaction, generated for example from the hydrogenation reaction of a hydrocarbon resin during the actual combination of pressure ranging up to about 25 MPa (250 bar) and temperatures of up to about 275 °C.

One important control parameter for quality and yield of hydrogenated hydrocarbon resin is to maintain activity of the hydrogenation catalyst sufficiently high and consequently to keep hydrogenation temperatures below a certain level to prevent cracking of the resin and subsequent yield losses. As discussed above, a catalyst's lifetime is related to the temperature of the reaction conditions with higher temperatures increasing the aging of the catalyst.

Two problems are encountered with increased catalyst aging: firstly, production costs are increased due to decreased catalyst life. Secondly, when a catalyst's activity is decreased, reaction temperature must be increased in order for the desired chemical conversion to occur. However, increased temperature also increases unwanted secondary reactions e.g. resin cracking.

EP-A-0 725 087 discloses a process of hydrotreating hydrocarbon resins in the presence of hydrogen and a catalyst selected from at least one of the group consisting of group IB, IIB, VIB and VIII metal and oxides thereof.

### Disclosure of Invention

It is an underlying object of the invention to provide a catalytic fixed bed reactor for exothermic reactions, wherein the catalytic fixed bed reactor has an increased catalyst volume thereby permitting reactions to have a greater residence time in the reactor while at a lower temperature to obtain the desired conversion.

It has been found that a distance between two cooling surfaces in particular determines the maximum temperature of a catalytic fixed bed in operation. The provision of a cooling jacket surrounding at least part of the vessel and a cooling element, which is arranged within the vessel and extends substantially in the vessel's longitudinal direction, serves to effectively control the "core" temperature by lowering this distance. This improved fixed bed reactor can be used in many different ways. For example, the more effective cooling characteristics can be used to choose an optimized combination of cross-sectional area of the catalyst fixed bed and superficial velocity of a product within the fixed bed, or can be used to increase the lifetime of the catalyst.

Thus, the present invention relates to the use of a fixed bed reactor comprising:
- a hollow, closed reaction vessel with a product inlet and a product outlet, wherein
- at least part of the vessel is surrounded by a cooling jacket with an inlet for a cooling medium and an outlet for the cooling medium; wherein the cooling element is arranged within the vessel and extends substantially in longitudinal direction of the vessel,
for hydrotreating hydrocarbon resins.

Further embodiments of the invention are set forth in the attached set of claims.

According to a preferred embodiment, the reaction vessel has a cylindrical portion, and the cooling jacket surrounding the vessel has an annular cross-sectional shape. The cylindrical shape of the reaction vessel is the optimum shape with respect to its cooling characteristics, because the distance between cooling elements within the vessel and the cylindrical outer walls of the reaction vessel is constant, consequently limiting or reducing temperature deviations within the catalytic fixed bed.

According to a further preferred embodiment of the invention, the cooling element consists of two substantially concentrically arranged tubes, an inner tube and an outer tube defining an inner flow passage within the inner tube and an outer flow passage within the space with an annular cross section between the inner tube and the outer tube; and the inner tube is at one end in fluid tight connection to an outlet for the cooling medium and at the other end in fluid communication with the outer flow passage. The design of the cooling element in the shape of two concentrically arranged tubes has an advantage that this cooling element is easy to manufacture and, moreover, generates very small maldistribution effects in the fixed bed. However, other shapes of the cooling elements, including cooling ribs, can also be used which increase heat removal but decrease the maldistribution effects, i.e. the increased flow of educt components along the walls of the cooling ribs. The flow direction of the cooling medium inside the cooling element with the inner tube serving as a core return pipe forces relatively cold fresh cooling medium to the outside of the cooling element in order to maximize heat transfer.

According to a further advantageous embodiment of the invention, a grid is provided inside the reaction vessel, and the grid is positioned adjacent to a bottom wall of the reaction vessel. The grid is chosen to carry the catalyst particles to be filled inside the reaction vessel of the fixed bed reactor and is pivotally mounted to the vessel. The pivotal mounting of the grid helps to simplify removal of exhausted catalysts because when the exhausted catalyst is dumped from the reaction vessel into a drum for removal as dangerous waste, the grid swings away from the discharge nozzle of the reaction vessel without blocking the outlet port or falling into the waste drum. This speeds up the exchange of the catalytic fixed bed and minimizes the exposure of the operator to exhausted catalyst.

According to a further preferred embodiment of the invention, the grid is placed substantially at the level of the bottom end of the cooling jacket. In practice, continuously operated catalytic fixed bed reactors often also show a temperature profile in the longitudinal direction. Temperatures within the reactor are related to the distance from a cooling surface with the greatest temperatures occurring at the greatest distance from any cooling surface. It is also advantageous to place the supporting grid for the catalyst particles at the level of the bottom end of the cooling jacket in order to maintain the generation of heat inside the area with heat removal via the wall, and to make optimum use of the cooling jacket surrounding the vessel. The grid has a spacing which is small enough to retain the catalyst particles.

According to a further preferred embodiment of the invention, the cooling element is fastened at the top side thereof and is suspended freely into the vessel. This prevents stress forces from acting on this tube.

The cooling element, which is suspended freely into the vessel, can be supported by spacers. Although this measure is in most cases not necessary, it may be helpful to prevent the inner tube from being deflected to one side and from being subjected to tension forces when filling the catalyst particles into the reaction vessels.

As used herein, "hydrotreating" means contacting a colored hydrocarbon resin with hydrogen in the presence of a catalyst to reduce its color without changing the other desirable physical characteristics, such as softening point, cloud point, molecular weight and heat stability. The reaction is a selective hydrogenation reaction, since the color bodies present in the resin are hydrogenated while the content of carbon-carbon double bonds in the resin remains substantially unchanged. Carbon-carbon double bonds include both ethylenic and aromatic double bonds.

A wide variety of hydrocarbon resins may be used together with the fixed bed reactor of the present invention, such as C-5 hydrocarbon resins, C-9 hydrocarbon resins, mixed C-5/C-9 hydrocarbon resins, vinyl aromatic-modified C-5 hydrocarbon resins, dicyclopentadiene resins, aromatic-modified dicyclopentadiene resins, terpene resins, terpene-phenolic resins, mixed C-9/C-4 resins, and coumerone-indene resins. The term "resin" as used herein indicates a low molecular weight synthetic polymer made by polymerizing unsaturated monomers either thermally or in the presence of an acidic catalyst, e.g., a Friedel-Crafts catalyst. These polymers usually have a weight average molecular weight (M_{W}) of about 250-100,000, preferably about 400-6,000, and most preferably about 400-2,000. The notations "C-5" and "C-9" indicate that the monomers from which the resins are made are predominantly hydrocarbons having 4-6 and 8-10 carbon atoms, respectively. All of the resins mentioned above typically have a yellow or amber color before treatment.

Catalysts to be used with the fixed bed reactor are hydrogenation catalysts that are selective enough in their action so that only the color bodies are hydrogenated. Color bodies are highly conjugated, polyunsaturated organic compounds that may also contain polar atoms such as oxygen, sulfur and nitrogen, e.g., indoles and quinones. The carbon-carbon double bonds in the resin are not substantially hydrogenated. Therefore, the properties of the resin that are commonly measured, e.g., softening point, cloud point, molecular weight, and heat stability, are also essentially unaffected. In addition, color body precursors are not substantially hydrogenated. Color body precursors are defined as colorless materials that become colored after aging.

Catalysts with the required selectivity are selected from the metals of Groups Group IB, IIB, VIB, and VIII and oxides thereof. These metals or their oxides can be used alone or in combination. The metals or metal oxides can be used directly or can be carried on a suitable support, such as silica, alumina, or carbon. Nickel, nickel/zinc, and palladium are preferred. Nickel/zinc oxide on a silica support is most preferred.

The hydrogen pressure used for the hydrotreating reaction preferably ranges between 0.1 and about 2 MPa (1 to about 20 bar), more preferably between 0.1 and about 1.5 MPa (1 to about 15 bar), and most preferably between 0.1 and about 1 MPa (1 to 10 bar). The temperature preferably ranges between about 100 and 300 °C, more preferably between about 150 and 300 °C, and most preferably between about 200 and 300°C. The amount of catalyst used preferably ranges between about 0.01 and 50%, based on the weight of the resin, more preferably between about 0.5 and 40%, and most preferably between about 1 and 35%.

When the resins are made by polymerization of monomers in a solvent, the hydrotreatment can be carried out in the original polymerization solvent after the resins are neutralized and polymerization catalyst residues are removed. The hydrotreatment can also be carried out in an aromatic or aliphatic solvent solution of redissolved resin, or the resins can be treated in a molten state (neat).

Using the fixed bed reactor , the hydrotreating reaction can be carried out under very mild conditions of constant temperature, thus causing only little side reactions and decolorization with a high yield.

### Brief Description of the Drawings

The aforementioned features of the present invention will become more readily apparent and may be understood by referring to the following description of an illustrated embodiment of the catalytic fixed bed reactor, taken in conjunction with the accompanying drawings, in which
- Fig. 1: illustrates a reactor design in the prior art; and
- Fig. 2: illustrates an embodiment of the inventive reactor design with a cooling element arranged within the vessel.

### Embodiment of the Invention

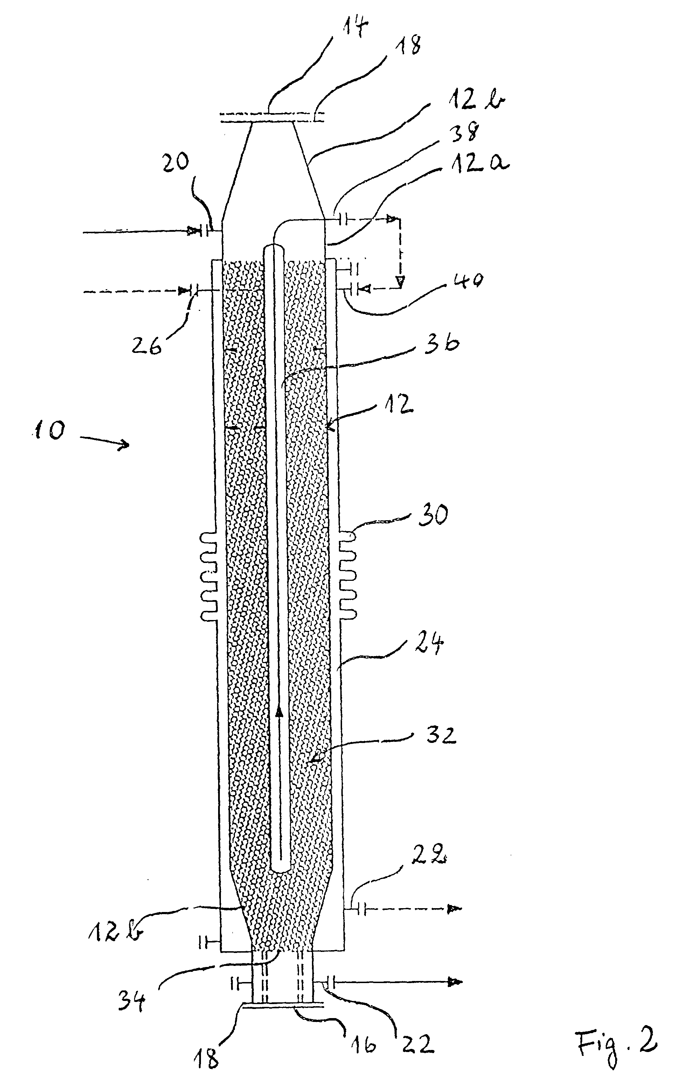

Fig. 2 depicts a fixed bed reactor to be used in the practise of the present invention which is generally tubular hollow reaction vessel 12 with a cylindrical portion 12a and frustoconical portions 12b at the top side and bottom side of the vessel 12. The top side and bottom side of the vessel 12 can be closed tight by covering lids 14 and 16, which are fixed to flanges 18 and 20 integrally connected to the frustoconical portions 12b of the reaction vessel 12. The flanges 18 are preferably welded to the frustoconical portions of the reaction vessel. Although other materials are also contemplated, the use of metal, especially steel, for manufacturing the reaction vessel is preferred because of the high heat conduction characteristics of steel. Moreover, many chemical reactions are carried out at elevated pressures, such as the hydrogenation reaction of a hydrocarbon resin at a pressure ranging from up to about 25 MPa (250 bar), preferably at pressures ranging from about 15 MPa (150 bar) to about 25 MPa (250 bar), and a reaction vessel made of metal therefore provides high reactor stability.

The reaction vessel 12 is provided inside an inlet duct 20 and an outlet duct 22 for the chemical substances to be processed. The inlet duct 20 and outlet duct 22 can be provided with suitable valve means (not shown). A part of the outer wall of the reaction vessel 12 is surrounded by a cooling jacket 24 which is provided with an inlet duct 26 and outlet duct 28 for the cooling medium, preferably cooling oil. In the present case, the cooling jacket also surrounds part of the frustoconical section 12b of the vessel near the bottom end of the fixed bed reactor.

To avoid thermal expansion induced forces on the heat jacket, a commonly used compensating means is provided, e.g. in the form of a flexible section 30 which compensates the expansion of the heat jacket 24.

A fixed bed of catalyst particles 32 inside the vessel 12 rests on a grid 34 which is arranged at the level within that portion of the reactor which is surrounded by the cooling jacket 24.

As can be seen in Fig. 2, an additional cooling element 36 is placed inside the vessel 24. In the operational state, the additional cooling element 36 runs in the longitudinal direction of the vessel 12 and is surrounded by the catalytic fixed bed 32. In order to prevent thermal expansion forces from acting on the additional cooling element 36, this element is only attached to the top side of the reactor. This attachment can be carried out in any suitable manner contemplated by those skilled in the art.

The additional cooling element 36 consists of two concentrically arranged tubes; an inner tube and an outer tube. The inner tube is connected to an outlet 38 for the cooling medium so that the cooling medium inside the additional cooling element 36 leaves the additional cooling element through the inner tube. Between the inner tube and the outer tube, a flow passage is formed with an annular cross section which is in fluid communication with the inlet duct 26 for the cooling medium. At the bottom side of the cooling element 36, the outer flow passage between inner tube and outer tube and the flow passage within the inner tube are in fluid communication. The relatively cold, fresh cooling medium is therefore forced to the outside of the tube and flows in a downward direction before it returns through the inner tube to the outlet of the reactor.

The additional cooling element can be connected to an individual cooling circuit. However, it is advantageous to connect the outlet 38 of the additional cooling element 36 to an inlet 40 of the cooling jacket 24. Consequently, the cooling system for both the cooling jacket and the additional cooling element may use a single pump for the cooling medium.

The provision of the additional cooling element reduces the distance between adjacent cooling elements and, in consequence, reduces the maximum temperature increase in the catalytic fixed bed. Moreover, the cross-sectional surface area of the catalytic fixed bed can be increased, and the flux of the chemical components to be processed can be increased compared to the conventional reactor design.

The inner tube hangs freely inside the reactor and may be supported by spacers (not shown) and by the catalyst. The catalytic fixed bed therefore serves to stabilize the position of the freely suspended additional cooling element.

The catalyst is supported in the bottom part of the reactor by a steel support chair in the form of a grid 34 which is placed at the same level as the bottom side of the cooling jacket. This serves to remove the heat reaction inside this area via the cooling jacket. Moreover, the support grid is pivotally mounted on the reaction vessel. When exhausted catalyst is dumped into a drum for removal as dangerous waste, this support chair swings away from the discharge nozzle without blocking the outlet port or falling into the waste drum. The pivotally mounted support grid may be preferably operated from the outside to minimize operator exposure to exhausted catalyst when exchanging those catalyst particles, the activity of which has dropped due to aging effects.

According to a preferred embodiment of the invention, the fixed bed reactor was used for hydrotreating hydrocarbon resins according to the invention as follows. A pellet Ni/ZnO hydrogenation catalyst on a SiO₂ catalyst was filled in the fixed bed reactor according to the invention, activated at 250°C under hydrogen, and the evolving water was removed by nitrogen purge. The hydrocarbon resin was dissolved in an aliphatic solvent. The resin feedstock contained styrene, alpha-methylstyrene, vinyltoluenes, indene and alkyl-substituted indenes as reactive compounds, and was polymerized using a BF₃ catalyst. The hydrocarbon resin solution was then passed through the fixed bed reactor together with hydrogen. The hydrotreatment was carried out at 1 MPa (10 bar) hydrogen pressure at 265°C. The hydrotreated resin had a markedly reduced Gardner color (G), whereas the drop softening point and the cloudpoint remained substantially unchanged as compared to the untreated hydrocarbon resin.

Various modifications and variations of the present invention can be made without departing from the scope of the appended claims.

## Claims

1. A use of a fixed bed reactor comprising:
- a hollow, closed reaction vessel with a product inlet and a product outlet, wherein
- at least part of the vessel is surrounded by a cooling jacket with an inlet for a cooling medium and an outlet for the cooling medium; wherein the cooling element is arranged within the vessel and extends substantially in longitudinal direction of the vessel,
for hydrotreating hydrocarbon resins.

2. The use according to claim 1, wherein
- the reaction vessel has a cylindrical portion and the cooling jacket surrounding the vessel has an annular shape.

3. The use according to claim 1 or 2, wherein
- the cooling element consists of two concentric tubes, an inner tube and an outer tube defining an inner flow passage within the inner tube and an outer flow passage beyond the annular space between inner tube and outer tube; and
- the inner flow passage is at one end of the inner tube in tight fluid connection with an outlet for the cooling medium and at the other end of the inner tube in fluid communication with the outer flow passage.

4. The use according to anyone of the preceding claims, wherein
- a grid inside the vessel adjacent to a bottom wall of the vessel is provided, the grid being chosen to carry the catalyst particles to be filled inside the vessel of the fixed bed reactor; and
- the grid is pivotally mounted on the vessel.

5. The use according to claim 4, wherein
- the grid is placed adjacent to the bottom end of the cooling jacket.

6. The use according to anyone of the preceding claims, wherein
- the cooling element is held at a top side thereof and is suspended freely into the vessel.

7. The use according to anyone of the preceding claims, wherein the hydrocarbon resins are hydrotreated in the presence of hydrogen and a catalyst selected from at least one of the group consisting of Group IB, IIB, VIB, and VIII metals and oxides thereof.

8. The use according to claim 7, wherein the hydrocarbon resin is an aliphatic or aromatic hydrocarbon resin.

9. The use according to claim 8, wherein the hydrocarbon resin is selected from the group consisting of C-5 hydrocarbon resins, C-9 hydrocarbon resins, mixed C-5/C-9 hydrocarbon resins, vinyl aromatic-modified C-5 hydrocarbon resins, dicyclopentadiene resins, aromatic-modified dicyclopentadiene resins, terpene resins, terpenephenolic resins, mixed C-9/C-4 resins, and coumeroneindene resins.

10. The use according to anyone of the preceding claims, wherein the catalyst is selected from at least one of the group consisting of nickel/zinc, nickel, palladium, and oxides thereof.

11. The use according to anyone of the preceding claims, wherein the catalyst is used directly or carried on a support comprising one or more of the group consisting of silica, alumina and carbon.

12. The use according to anyone of the preceding claims, wherein the hydrogen pressure is 0.1 to 2.0 MPa (1 to 20 bar).

## Patentansprüche

1. Verwendung eines Festbettreaktors, welcher umfasst:
- ein hohles, geschlossenes Reaktionsgefäß mit einem Produkteinlass und einem Produktauslass, wobei
- mindestens ein Teil des Gefäßes von einem Kühlmantel mit einem Einlass für ein Kühlmedium und einem Auslass für das Kühlmedium umgeben ist; wobei das Kühlelement innerhalb des Gefäßes angeordnet ist und sich im Wesentlichen in Längsrichtung des Gefäßes erstreckt,
für das Hydrotreating von Kohlenwasserstoffharzen.

2. Verwendung nach Anspruch 1, bei der
- das Reaktionsgefäß einen zylindrischen Abschnitt hat und der Kühlmantel, der das Gefäß umgibt, eine ringförmige Form aufweist.

3. Verwendung nach Anspruch 1 oder 2, bei der
- das Kühlelement aus zwei konzentrischen Rohren besteht, einem inneren Rohr und einem äußeren Rohr, welche einen inneren Stromdurchtritt innerhalb des inneren Rohres und einen äußeren Stromdurchtritt in dem ringförmigen Raum zwischen dem inneren Rohr und dem äußeren Rohr begrenzen; und
- der innere Stromdurchtritt an einem Ende des inneren Rohres in dichter Fluidverbindung mit einem Auslass für das Kühlmedium und am anderen Ende des inneren Rohres in Fluidkommunikation mit dem äußeren Stromdurchtritt steht.

4. Verwendung nach irgendeinem der vorangehenden Ansprüche, bei der
- ein Gitter innerhalb des Gefäßes in Nachbarschaft zur Bodenwand des Gefäßes vorgesehen ist, wobei das Gitter so gewählt ist, dass es die in das Gefäß des Festbettreaktors einzufüllenden Katalysatorteilchen trägt; und
- das Gitter schwenkbar an dem Gefäß angebracht ist.

5. Verwendung nach Anspruch 5, bei der
- das Gitter in Nachbarschaft zu dem unteren Ende des Kühlmantels angeordnet ist.

6. Verwendung nach irgendeinem der vorangehenden Ansprüche, wobei
- das Kühlelement an einer oberen Seite desselben gehalten wird und frei in das Gefäß hängt.

7. Verwendung nach irgendeinem der vorangehenden Ansprüche, bei der die Kohlenwasserstoffharze in Anwesenheit von Wasserstoff und einem Katalysator, der aus mindestens einem Mitglied der Gruppe ausgewählt ist, die aus Metallen der Gruppe IB, IIB, VIB und VIII und deren Oxiden besteht, einem Hydrotreating unterzogen werden.

8. Verwendung nach Anspruch 7, bei der das Kohlenwasserstoffharz ein aliphatisches oder aromatisches Kohlenwasserstoffharz ist.

9. Verwendung nach Anspruch 8, bei der das Kohlenwasserstoffharz ausgewählt ist aus der Gruppe bestehend aus C-5-Kohlenwasserstoffharzen, C-9-Kohlenwasserstoffharzen, gemischten C-5/C-9-Kohlenwasserstoffharzen, vinylaromatischmodifizierten C-5-Kohlenwasserstoffharzen, Dicyclopentadienharzen, aromatischmodifizierten Dicyclopentadienharzen, Terpenharzen, Terpenphenolharzen, gemischten C-9/C-4-Harzen und Cumaronharzen.

10. Verwendung nach irgendeinem der vorangehenden Ansprüche, bei der der Katalysator aus mindestens einem Mitglied der Gruppe ausgewählt ist, die aus Nickel/Zink, Nickel, Palladium und deren Oxiden besteht.

11. Verwendung nach irgendeinem der vorangehenden Ansprüche, bei der der Katalysator direkt oder auf einem Träger getragen verwendet wird, welcher ein oder mehrere Mitglieder der Gruppe umfasst, die aus Siliciumdioxid, Aluminiumoxid und Kohlenstoff besteht.

12. Verwendung nach irgendeinem der vorangehenden Ansprüche, bei der der Wasserstoffdruck 0,1 bis 2,0 MPa (1 bis 20 bar) beträgt.

## Revendications

1. Utilisation d'un réacteur à lit fixe comprenant :
- un récipient réactionnel fermé et creux avec une entrée de produit et une sortie de produit, où
- au moins une partie du récipient est entourée par une chemise réfrigérante avec une entrée pour un agent réfrigérant et une sortie pour l'agent réfrigérant ; où l'élément réfrigérant est disposé dans le récipient et s'étend sensiblement dans la direction longitudinale du récipient,
pour hydrotraiter des résines hydrocarbonées.

2. Utilisation selon la revendication 1, où
- le récipient réactionnel a une partie cylindrique et la chemise réfrigérante entourant le récipient a une forme annulaire.

3. Utilisation selon la revendication 1 ou 2, où
- l'élément réfrigérant consiste en deux tubes concentriques, un tube interne et un tube externe définissant un passage d'écoulement interne dans le tube interne et un passage d'écoulement externe au-delà de l'espace annulaire entre le tube interne et le tube externe ; et
- le passage d'écoulement interne est à une extrémité du tube interne en communication par fluide étroite avec une sortie pour l'agent réfrigérant et à l'autre extrémité du tube interne en communication par fluide avec le passage d'écoulement externe.

4. Utilisation selon l'une quelconque des revendications précédentes, où
- il est prévu une grille à l'intérieur du récipient en position adjacente à une paroi inférieure du récipient, la grille étant choisie pour soutenir les particules de catalyseur destinées à être introduites dans le récipient du réacteur à lit fixe ; et
- la grille est montée à pivotement sur le récipient.

5. Utilisation selon la revendication 4, où
- la grille est placée en position adjacente à l'extrémité inférieure de la chemise réfrigérante.

6. Utilisation selon l'une quelconque des revendications précédentes, où
- l'élément réfrigérant est maintenu à son côté supérieur et est suspendu librement dans le récipient.

7. Utilisation selon l'une quelconque des revendications précédentes, où les résines hydrocarbonées sont hydrotraitées en présence d'hydrogène et d'un catalyseur choisi parmi au moins l'un du groupe consistant en les métaux IB, IIB, VIB et VIII et leurs oxydes.

8. Utilisation selon la revendication 7, où la résine hydrocarbonée est une résine hydrocarbonée aliphatique ou aromatique.

9. Utilisation selon la revendication 8, où la résine hydrocarbonée est choisie dans le groupe consistant en les résines hydrocarbonées en C-5, les résines hydrocarbonées en C-9, les résines hydrocarbonées en C-5/C-9 mélangées, les résines hydrocarbonées C-5 modifiées par des substances vinyliques aromatiques, les résines de dicyclopentadiène, les résines de dicyclopentadiène modifiées par des substances aromatiques, les résines terpéniques, les résines terpène-phénoliques, les résines en C-9/C-4 mélangées et les résines de coumérone-indène.

10. Utilisation selon l'une quelconque des revendications précédentes où le catalyseur est choisi parmi l'un au moins du groupe consistant en le nickel/zinc, le nickel, le palladium et leurs oxydes.

11. Utilisation selon l'une quelconque des revendications précédentes où le catalyseur est utilisé directement ou porté sur un support comprenant une ou plusieurs substances du groupe consistant en la silice, l'alumine et le carbone.

12. Utilisation selon l'une quelconque des revendications précédentes où la pression d'hydrogène est 0,1 à 2,0 MPa (1 à 20 bars).
